# FASCICULE DE BREVET EUROPEEN

(11) **EP 4 463 638 B1**
(45) Date de publication et mention de la délivrance du brevet: **02.12.2026**
(21) Numéro de dépôt: 23703270.1
(22) Date de dépôt: 09.01.2023
(51) Int. Cl.: F16D 65/00, B60T 17/04, B61H 5/00, F16D 65/092, B60T 17/22

(54) **ENSEMBLE À FRICTION POUR SYSTÈME DE FREINS POUR MATÉRIEL ROULANT FERROVIAIRE**
REIBUNGSANORDNUNG FÜR BREMSSYSTEME VON SCHIENENFAHRZEUGEN
FRICTION ASSEMBLY FOR RAILWAY ROLLING STOCK BRAKE SYSTEM

(30) Priorité: 14.01.2022 FR 2200321
(43) Date de publication de la demande: 20.11.2024
(73) Titulaire: Tallano Technologies, 75015 Paris (FR)
(72) Inventeur: ADAMCZAK, Loïc, 75015 PARIS (FR); MAISTRE, Adrien, 75015 PARIS (FR)
(74) Mandataire: Plasseraud IP
(86) Numéro de dépôt international: PCT/FR2023/050023
(87) Numéro de publication internationale: WO 2023/135384

(56) Documents cités:
- FR-A1- 3 088 394
- US-A1- 2020 149 601

## Description

La présente invention concerne le freinage des matériels roulants ferroviaires et notamment les ensembles à friction des systèmes de freinage des matériels roulants ferroviaires. On entend par de tels matériels tous véhicules configurés pour rouler sur des rails, tels que trains, tramways, métropolitains.

Le système de freinage comporte généralement un disque solidaire d'une roue ou d'un essieu du matériel roulant ferroviaire. Le système de freinage comporte en outre un ensemble à friction qui comprend un porte-semelle qui supporte une semelle de friction. La semelle de friction comprend usuellement des moyens de fixation au porte-semelle et un patin frottant. Lorsqu'un conducteur actionne le système de freinage, le patin frottant de la semelle de friction vient au contact du disque pour exercer une force de freinage sur le disque. Ainsi, par frottement, la semelle de friction freine le disque solidaire de la roue ou de l'essieu. Généralement, le matériel roulant ferroviaire comporte deux ensembles à friction, disposés de part et d'autre du disque de façon à prendre en tenaille, ou autrement dit en sandwich le disque pour le comprimer des deux côtés. Le patin frottant de la semelle de friction comporte habituellement un matériau métallique, tel que la fonte, un matériau fritté ou un matériau composite. Ainsi, lorsque le patin frottant de la semelle de friction frotte contre le disque, des particules de matière issues du patin frottant et du disque sont émises dans l'atmosphère ambiante autour de l'ensemble à friction. Ainsi, le système de freinage émet une pollution atmosphérique sous forme de particules plus ou moins fines.

On a donc cherché à capter les particules de matière émises lors du freinage, notamment en disposant un dispositif d'aspiration, alimenté par une pompe, à proximité d'une zone d'émission des particules issues du patin frottant de la semelle de friction. De plus, on a cherché à ce que cette aspiration des particules soit la plus efficace possible.

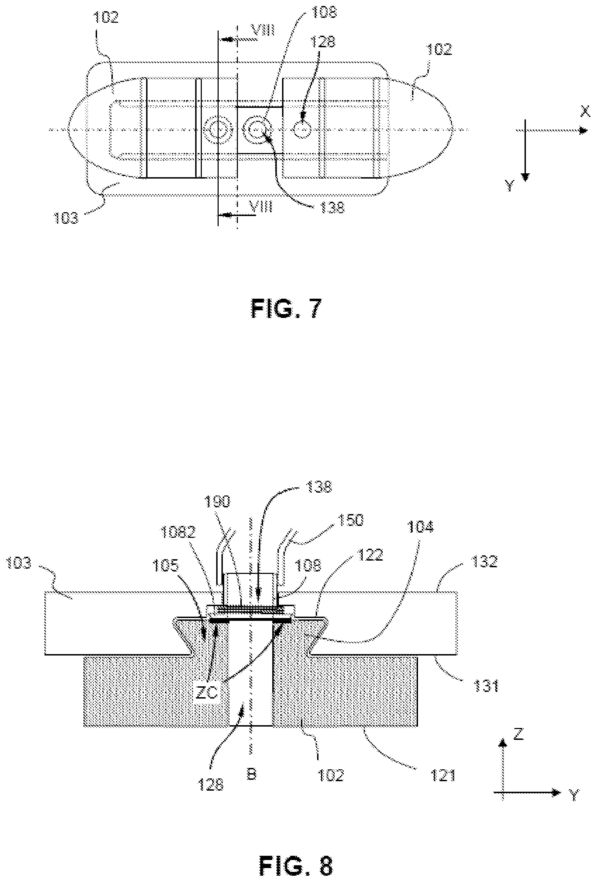

Une solution pour résoudre ce problème est l'ensemble à friction illustré en figures 7 et 8, qui représentent l'art antérieur. Cet art antérieur est décrit dans le document FR 3088394. La figure 7 est une vue de dessous de cet ensemble, et la figure 8 est une coupe transversale selon la ligne VIII-VIII de la figure 7.

Le porte-semelle 103 s'étend longitudinalement selon une direction longitudinale X, et transversalement selon une direction transversale Y. Le plan X-Y est horizontal. La direction Z, perpendiculaire au plan X-Y pour former un repère (X,Y,Z), est verticale, orientée vers le haut. Le porte-semelle 103 comporte une face inférieure 131 destinée à accueillir une semelle de friction 102, et une face supérieure 132, qui s'étendent chacune parallèlement au plan X-Y.

Le porte-semelle 103 présente sur sa face inférieure 131 une glissière d'accueil 105 concave en queue d'aronde, qui s'étend longitudinalement depuis une première extrémité du porte-semelle 103 jusqu'à proximité de la seconde extrémité du porte-semelle 103 où cette glissière est non-débouchante. Le porte-semelle 103 comprend sur l'axe longitudinal X deux conduits secondaires 138 espacés. Chaque conduit secondaire 138 relie la face supérieure 132 au fond de la glissière 105 sur la face supérieure.

La semelle de friction 102 est en deux parties identiques, où chaque partie présente une face de friction (première face) 121 destinée à être en contact de friction avec le disque (non-représenté) du véhicule et une face opposée (seconde face) 122. Cette face opposée 122 présente un profilé 104 convexe en queue d'aronde configuré pour coopérer avec la glissière d'accueil 105. En utilisation, on enfonce une première partie de la semelle 102 selon l'axe longitudinal X en faisant coulisser le profilé 104 dans la glissière 105, jusqu'en butée de la glissière 105. Puis on enfonce la seconde partie de la semelle 102 selon l'axe longitudinal X en faisant coulisser le profilé 104 dans la glissière 105, jusqu'en butée de la première partie de la semelle 102, les surfaces en contact de la première partie et de la seconde partie étant idéalement conformées pour s'épouser sur toute leur surface. La semelle 102 est ainsi solidarisée avec le porte-semelle 103.

Chacune des parties de la semelle 102 comprend un conduit primaire 128 orienté selon l'axe vertical Z. Lorsque ces parties sont fixées sur le porte-semelle 103 en utilisation, chacun des deux conduits primaires 128 est situé en regard d'un conduit secondaire 138. On désigne par axe B l'axe principal d'un conduit primaire 128 et du conduit secondaire 138 situé en regard, ce conduit primaire 128 et ce conduit secondaire 138 étant donc coaxiaux. Ainsi, chaque conduit primaire 128 forme, avec un des conduits secondaires 138 ménagé dans le porte-semelle 103, un circuit qui permet d'aspirer des particules émises par la semelle de friction 102 lors du freinage. L'axe B est donc parallèle à l'axe vertical Z.

Une bague de jonction 108, constituée d'un tube 1081 et d'une collerette 1082 prolongeant radialement et vers l'extérieur ce tube à une de ses extrémités, est montée dans le conduit secondaire 138. Le tube est inséré dans le conduit secondaire 138, le diamètre externe du tube étant égal au diamètre interne du conduit secondaire 138 afin d'assurer la meilleure étanchéité possible. La collerette 1082 se loge dans un logement annulaire du porte-semelle 103, ce logement étant centré sur l'axe principal B et en regard de la face opposée 122 de la semelle 102. Le logement annulaire a un diamètre supérieur à celui du conduit secondaire 138 et inférieur à celui de la collerette 1082. Ainsi, la collerette 1082 est prise en sandwich entre le profilé 104 de la semelle 102 et le fond de la glissière 105 du porte-semelle 103. Une fois dans son logement, la collerette 1082 est en contact avec la face 122 du profilé 104 de la semelle 102. Avantageusement, ce contact est renforcé par exemple par déformation (écrasement) de la collerette 1082 entre le fond du logement et la face 122. Alternativement (comme représenté en figure 8), ce contact est réalisé par compression d'un ressort ondulé monté sur le tube entre la collerette 1082 et le fond du logement. Ainsi, la collerette 1082 elle-même, ou le ressort ondulé, est un mécanisme de rappel 190 qui permet de plaquer la collerette 1082 contre le profilé 104 (voir ci-dessous).

La bague de jonction 108 traverse entièrement le porte-semelle 103 et en dépasse sur sa face supérieure 132 à sa face inférieure 131 munie de la glissière 105. Sur cette extrémité du tube de la bague 108 est fixé un tuyau 150 qui est relié à un dispositif d'aspiration (non-représenté) et qui permet l'aspiration au travers du conduit primaire 128 et du conduit secondaire 138 des particules issues du freinage du véhicule ferroviaire par usure de la semelle 102. Le tuyau 150 et le dispositif d'aspiration constituent un dispositif d'évacuation des particules.

La bague de jonction 108 sert à guider les particules issues du freinage depuis le conduit primaire 128 de la semelle 102 vers le conduit secondaire 138 du porte-semelle 103. La bague de jonction 108 vise donc à prévenir d'éventuelles fuites au travers du conduit primaire 128 et du conduit secondaire 138. Notamment, la bague de jonction 108 vise à limiter la quantité de particules issues du freinage qui pourraient se glisser dans l'interstice à l'interface entre la semelle de friction 102 et le porte-semelle 103, et surtout à empêcher un flux d'air provenant de l'extérieur de pénétrer par cet interstice dans le conduit secondaire 138, ce qui dégraderait l'aspiration par le dispositif d'aspiration.

De plus, la bague de jonction 108 est plaquée contre le profilé 104 à l'aide d'un mécanisme de rappel 190, comme indiqué ci-dessus. Ce mécanisme de rappel 190 contribue à prévenir un passage d'air à l'interface entre la semelle 102 et le porte-semelle 103 au niveau du conduit primaire 128 et du conduit secondaire 138, ce passage d'air étant dû à des jeux à l'interface entre le porte-semelle 103 et la semelle 102.

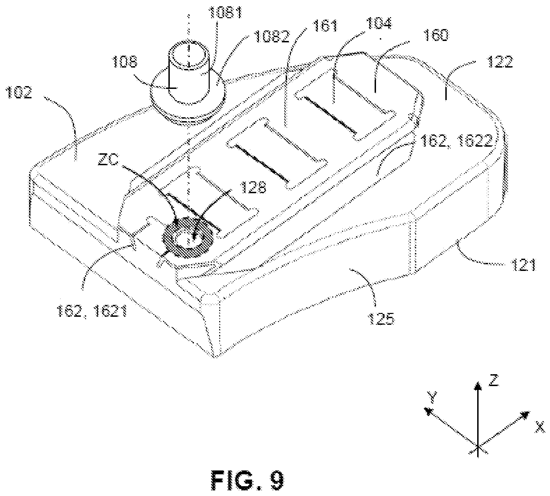

La semelle 102 comporte un matériau de friction 125, et une tôle 160 qui présente une base 161 et des pattes 162 qui s'étendent depuis la base 161. Par exemple cette tôle est métallique. La base 161 forme une partie de la face opposée 122 et du profilé 104. Les pattes 162 sont recourbées vers la face de friction 121. Ainsi, les pattes 162 comprennent des premières pattes 1621 qui pénètrent dans le matériau de friction 125 de façon à fixer le matériau de friction 125 sur la tôle 160. Les pattes 162 comprennent des deuxièmes pattes 1622 qui épousent le profil convexe du profilé 104 de façon à maintenir mécaniquement le matériau de friction 125 contre la base 161. La figure 9 illustre la semelle 102 en perspective avec la tôle 160.

Lorsque la semelle 102 est solidarisée avec le porte-semelle 103 en faisant coulisser le profilé 104 dans la glissière 105, la collerette 1082 de chaque bague 108 est plaquée contre la seconde face 122 du profilé 104. La collerette 1082 vient ainsi en contact avec la tôle 160 et avec le matériau de friction 125 sur une zone de contact ZC qui est circonférentielle de façon à entourer le conduit secondaire 138.

Ainsi, on a un ensemble à friction pour système de freins pour matériel roulant ferroviaire, cet ensemble à friction comprenant d'une part un porte-semelle comprenant une face inférieure, une face supérieure et au moins un conduit secondaire d'axe central A qui relie la face inférieure et une face supérieure, d'autre part au moins une semelle qui présente une première face qui est la face de friction et une seconde face qui est apte à être fixée sur la face inférieure par un mécanisme de fixation, et au moins un conduit primaire qui relie la première face et la seconde face, la semelle comportant un matériau de friction et une tôle qui présente une base qui forme une partie de la seconde face, et l'ensemble à friction comportant en outre au moins une bague de jonction qui est agencée dans le au moins un conduit secondaire et qui établit une jonction avec le au moins un conduit primaire lorsque le au moins un conduit primaire est aligné avec le au moins un conduit secondaire, et également un mécanisme de rappel qui maintient la au moins une bague de jonction en contact avec la seconde face sur une zone de contact circonférentielle.

La zone de contact ZC entre la bague 108 et la seconde face 122 s'étend sur la tôle 160 et sur le matériau de friction 125. Or le matériau de friction 125 présente naturellement une rugosité élevée (visible à l'œil nu). De plus, il existe nécessairement un manque de matière à l'interface entre la tôle 160 et sur le matériau de friction 125, à l'endroit où les pattes 162 pénètrent dans le matériau de friction 125. Ainsi, le contact entre la bague 108 et la seconde face 122 au niveau de la zone de contact ZC n'est pas parfait et il existe des fuites sur cette zone.

Une solution pour réduire ces fuites est de déposer un enduit sur la zone de contact. Cette solution complexifie l'élaboration de l'ensemble à friction.

### Description de l'invention

La présente invention vise à remédier à cet inconvénient.

L'invention vise à proposer un ensemble à friction dans lequel l'étanchéité entre la bague et la seconde face au niveau de la zone de contact est améliorée.

Ce but est atteint grâce au fait que la tôle est conformée de telle sorte que chacune des bagues de jonction vient en contact uniquement avec la base de la tôle et épouse la surface de la base sur la zone de contact.

Ainsi, la zone de contact de la seconde face est constituée uniquement par la base de la tôle. La surface de la tôle étant naturellement lisse, chacune des bagues de jonction épouse la surface de la base sur la zone de contact. Grâce à ces dispositions, les fuites entre la bague 108 et la seconde face 122 au niveau de la zone de contact ZC sont minimisées.

Par exemple, la surface de la base présente un surfaçage au niveau de la zone de contact de telle sorte que cette surface épouse plus intimement la surface de la au moins une bague au niveau de la zone de contact.

Ainsi, la surface de la bague épouse plus intimement la surface de la base de la tôle que si la surface de la tôle n'avait pas subi de surfaçage.

Par exemple, la tôle présente au moins un cylindre qui s'étend depuis la base le long de la paroi du au moins un conduit primaire.

Ainsi, la fixation de la tôle sur le matériau de friction est renforcée. En effet, ce cylindre agit comme une patte, c'est-à-dire comme un ancrage supplémentaire de la tôle sur le matériau de friction.

Par exemple, l'ensemble à friction comprend en outre un bloc qui est relié à un dispositif d'aspiration et qui est solidarisé avec le porte-semelle au niveau de la face supérieure, le bloc présentant une cavité qui est reliée par un circuit au dispositif d'aspiration et qui communique avec la face supérieure.

Ainsi, l'aspiration des particules depuis la semelle est plus efficace.

Par exemple, le bloc fait partie intégrante du porte-semelle.

Par exemple, le mécanisme de rappel est un ressort.

Par exemple, la bague de jonction comporte une collerette qui vient en contact uniquement avec la base et le mécanisme de rappel est la collerette.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue en coupe d'une partie d'un ensemble à friction selon l'invention.
[Fig. 2] La figure 2 est une vue en perspective de la semelle et d'une bague de jonction d'un ensemble à friction selon l'invention.
[Fig. 3] La figure 3 est une vue en perspective de la semelle et d'une bague de jonction d'un ensemble à friction selon une variante de l'invention.
[Fig. 4] La figure 4 est une vue en coupe et en perspective de la semelle et d'une bague de jonction d'un ensemble à friction selon une autre variante de l'invention.
[Fig. 5] La figure 5 est une vue en perspective par dessous de la semelle de l'ensemble à friction de la figure 4.
[Fig. 6] La figure 6 est une vue en coupe d'une partie d'un ensemble à friction selon l'invention illustrant un autre mode de réalisation du porte-semelle, du bloc et des bagues de jonction.
[Fig. 7] La figure 7, déjà décrite, est une vue de dessous d'un ensemble à friction selon l'art antérieur.
[Fig. 8] La figure 8, déjà décrite, est une coupe transversale selon la ligne VIII-VIII de la figure 7.
[Fig.9] La figure 9, déjà décrite, est une vue en perspective d'une semelle selon l'art antérieur, qui illustre la tôle fixée sur le matériau de friction.

### Description détaillée de l'invention

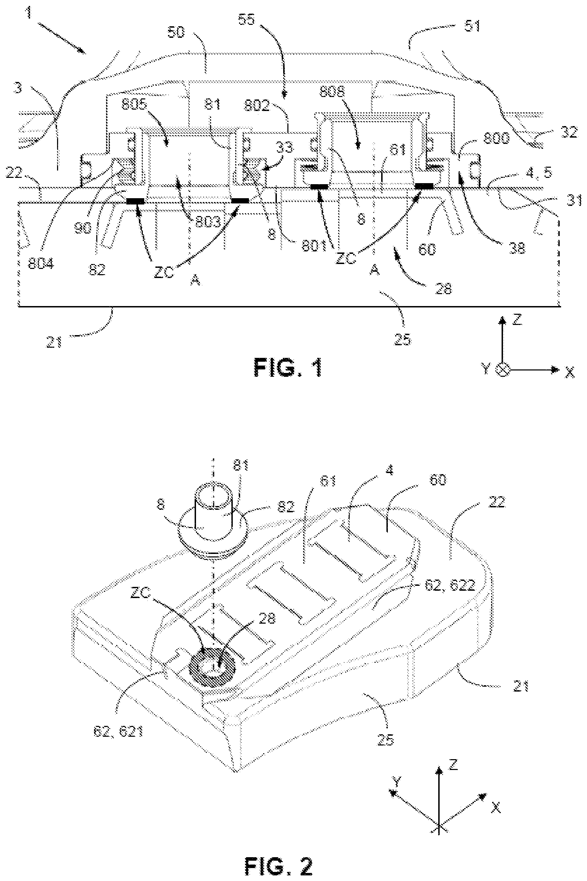

La figure 1 illustre un ensemble à friction 1 pour système de freins pour matériel roulant ferroviaire. Par exemple ces freins sont des freins à disque. Par exemple ces freins sont des freins sur une bande de roulement de la roue du matériel roulant. L'ensemble s'étend longitudinalement selon un axe longitudinal X, et verticalement selon un axe vertical Z. L'axe transversal Y forme un repère trigonométrique avec les axes X et Z. L'ensemble à friction 1 est représenté en coupe dans le plan vertical (X, Z), c'est-à-dire dans le plan qui passe par les axes centraux A des conduits secondaires 38. L'axe Y est dirigé vers l'intérieur de la page. Par souci de clarté, seule la portion de l'ensemble à friction 1 qui porte les bagues 8 (voir ci-dessous) est représentée. Les adjectifs « inférieur » et « supérieur » sont utilisé en référence à l'axe vertical Z, orienté vers le haut.

L'ensemble à friction 1 comprend d'une part un porte-semelle 3, et d'autre part au moins une semelle 2 en matériau de friction. Le porte-semelle 3 présente une face inférieure 31, et une face supérieure 32. La semelle 2 présente une première face 21 qui est la face de friction, et une seconde face 22. En fonctionnement, la semelle 2 est solidarisée avec le porte-semelle 3 par un mécanisme de fixation (4, 5). Par exemple, ce mécanisme de fixation comporte une glissière d'accueil 5 qui est formé sur la face inférieure 31, et un profilé 4 qui est formé sur la seconde face 22 et qui est configuré pour coopérer avec la glissière d'accueil 5. Ainsi, la solidarisation de la semelle 2 avec le porte-semelle 3 est réalisée par insertion et translation du profilé 4 dans la glissière 5 selon l'axe longitudinal X. Le mécanisme de fixation est alors tel que cette solidarisation est amovible. Le profilé 4 est visible sur la figure 2. D'une manière générale, la solidarisation de la semelle 2 avec le porte-semelle 3 est amovible, ce qui permet un remplacement de la semelle 2 une fois usée.

La semelle 2 comprend au moins un conduit primaire 28 reliant de façon étanche la première face 21 et la seconde face 22. En figure 1, la semelle 2 comprend deux conduits primaires 28. Le porte-semelle 3 comprend au moins un conduit secondaire 38 d'axe central A qui relie de façon étanche la face supérieure 32 et la face inférieure 31 au niveau du fond de la glissière d'accueil 5. En figure 1, le porte-semelle 3 comprend deux conduits secondaires 38. Le porte-semelle 3 comprend au moins une bague de jonction 8 agencée dans le au moins un conduit secondaire 38 et établissant une jonction avec le au moins un conduit primaire 28. En figure 1, le porte-semelle 3 comprend deux bagues de jonction 8. Lorsque la semelle 2 est solidarisée avec le porte-semelle 3, chaque conduit primaire 28 est aligné avec un conduit secondaire 38, c'est-à-dire que l'axe central de chaque conduit primaire 28 est l'axe central A du conduit secondaire 38 avec lequel il est aligné.

Une bague de jonction 8 comporte un corps 81 tubulaire et une collerette 82 à une extrémité de ce corps 81. La collerette 82 s'étend radialement vers l'extérieur depuis le corps 81, et présente donc un diamètre supérieur au diamètre externe du corps 81. Par exemple le diamètre interne du corps 81 est supérieur au diamètre d'un conduit primaire 28 afin de compenser les jeux entre la semelle 2 et le porte-semelle 3 selon l'axe X. L'extrémité distale du corps 81 se situe donc à l'opposé de la collerette 82.

On solidarise la semelle 2 sur le porte-semelle 3 jusqu'à ce que la semelle 2 recouvre chacune des bagues de jonction 8. Cette situation est illustrée en figure 1, dans le cas où la semelle comporte deux moitiés. La figure 1 est une vue en coupe dans le plan (X, Z) d'une portion de l'ensemble à friction 1. Sur la partie droite de la figure 1, la moitié droite de la semelle 2 est plaquée contre le porte-semelle 3 de telle sorte que la seconde face 22 de cette moitié droite est en contact avec la face inférieure 31 du porte-semelle 3. Sur la partie gauche de la figure 1, il existe un jeu entre la moitié gauche de la semelle 2 et le porte-semelle 3 de telle sorte que la seconde face 22 de cette moitié gauche n'est pas en contact avec la face inférieure 31 du porte-semelle 3. Dans tous les cas, le mécanisme de rappel 90 (voir ci-dessous) plaque la bague de jonction 8 contre la seconde face 22 de la semelle 2, et les l'extrémités distales des bagues de jonction 8 sont dans la cavité 55.

Dans la description ci-dessous on utilise l'article pluriel « des » devant les éléments « conduits primaires 28 », « conduits secondaires 38 », « bagues de jonction 8 », « trous 58 », « trous 808 », et le déterminant « chaque », pour traiter les cas de deux ou plus de ces éléments. La description ci-dessous est également valable dans le cas d'un seul conduit primaire 28, d'un seul conduit secondaire 38, d'une seule bague de jonction 8, d'un seul trou 58 et d'un seul trou 808.

L'ensemble à friction 1 comprend en outre un bloc 50 qui est solidarisé avec le porte-semelle 3 au niveau de la face supérieure 32. Par exemple ce bloc 50 est un bloc pneumatique. Par exemple le bloc 50 fait partie intégrante du porte-semelle 3. Par « faire partie intégrante », on entend que le bloc 50 n'est pas séparable du porte semelle 3, sauf avec des outils. Par exemple, le bloc 50 est moulé avec le porte-semelle 3, ou est soudé avec le porte-semelle 3. Le bloc 50 recouvre la face supérieure 32 du porte-semelle 3 au niveau de la portion de la face supérieure 32 qui comporte les orifices des conduits secondaires 38. Le bloc 50 comporte une cavité 55 qui est reliée à un circuit 51 qui est relié à un dispositif d'aspiration. La cavité 55 communique avec la face supérieure 32.

Comme illustré en figure 1, les bagues 8 sont montées sur une plaque 800 qui comporte autant de trous 808 que de bagues 8. La plaque 800 présente une face inférieure 801 et une face supérieure 802, l'axe de chaque trou 808 étant perpendiculaire à ces faces (801, 802). Chaque trou 808 relie la face inférieure 801 et une face supérieure 802. Lorsqu'une bague 8 est montée dans un trou 808, l'axe de la bague 8 est coaxial avec le trou 808. La plaque 800 est insérée et placée dans un logement 33 du porte-semelle 3 par en-dessous (par la face inférieure 31 du porte-semelle 3) de telle sorte que la face inférieure 801 est parallèle et alignée avec la face inférieure 31, comme illustré en figure 1. Alternativement, la face inférieure 801 est parallèle à la face inférieure 31, et légèrement au-dessus de celle-ci, c'est-à-dire que la face inférieure 801 est en retrait par rapport à la face inférieure 31. Dans les deux cas, lorsque la plaque 800 est placée dans le logement 33, la périphérie de la face supérieure 802 de la plaque 800 vient en appui contre le fond du logement 33 et la région de la face supérieure 802 qui porte les bagues 8 débouche dans la cavité 55. Par exemple la face supérieure 802 présente une partie centrale surélevée. Les bagues 8 débouchent dans la cavité 55, et l'axe de chaque bague 8 est coaxial avec l'axe d'un conduit primaire 28.

Chaque trou 808 comporte une portion inférieure 803 et une portion supérieure 805. La collerette 82 de la bague 8 se loge dans la portion inférieure 803, et le corps 81 de la bague 8 traverse la portion supérieure 805. Le diamètre de la portion inférieure 803 est supérieur au diamètre de la portion supérieure 805 de telle sorte qu'il existe un épaulement 804 à la jonction de ces portions. Le diamètre de la collerette 82 est égal ou légèrement inférieur au diamètre de la portion inférieure 803. Le diamètre de la portion supérieure 805 est égal ou légèrement supérieur au diamètre externe du corps 81, et inférieur au diamètre de la collerette 82. La collerette 82 vient donc en butée contre cet épaulement 804, soit directement, soit indirectement, comme expliqué ci-dessous.

Dans cette situation dans laquelle les bagues 8 sont montées sur une plaque 800, la portion inférieure 803 de chaque trou 808 de la plaque 800 constitue un conduit secondaire 38, et la portion supérieure 803 de chaque trou 808 de la plaque 800 constitue un trou 58 séparant la cavité 55 du porte-semelle 3 (voir ci-dessous).

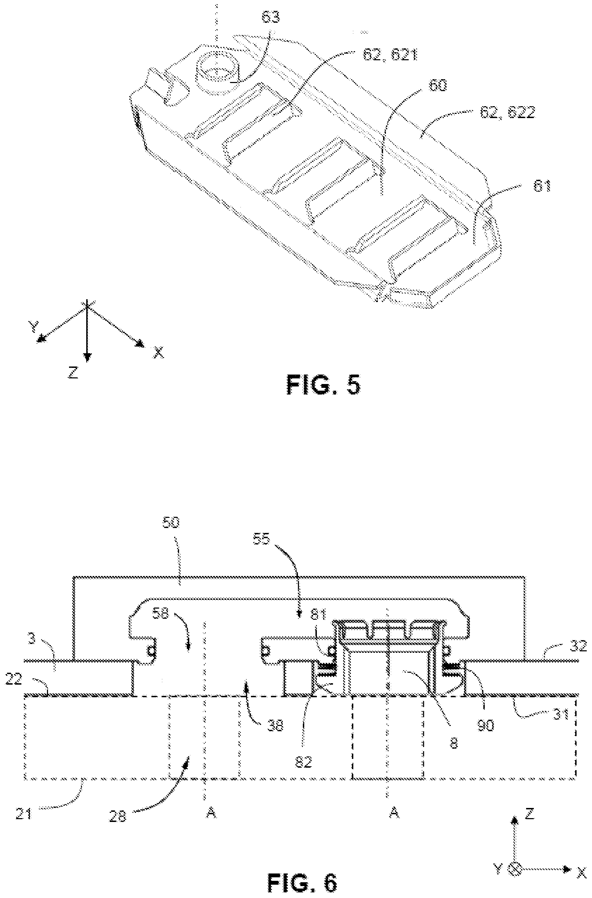

Alternativement, comme représenté en figure 6, les bagues 8 sont montées dans les conduits secondaires 38 du porte-semelle 3. Par souci de clarté, une des bagues 8, qui se loge dans le conduit secondaire 38 gauche, est enlevée. La collerette 82 de la bague 8 se loge dans le conduit secondaire 38. La cavité 55 est séparée du porte-semelle 3 par une paroi qui est en contact avec la face supérieure 32 du porte-semelle 3 et qui présente des trous 58 qui se situent en face des conduits secondaires 38. Le corps 81 de la bague 8 traverse ces trous et débouche dans la cavité 55. Le diamètre de la collerette 82 est égal ou légèrement inférieur au diamètre du conduit secondaire 38. Le diamètre de chacun des trous 58 est égal ou légèrement supérieur au diamètre externe du corps 81, et inférieur au diamètre de la collerette 82. Ainsi, lorsque la bague 8 est insérée dans le conduit secondaire 38, la collerette 82 vient en butée contre le bord du trou 58 qui est situé en regard du conduit secondaire 38, soit directement, soit indirectement, comme expliqué ci-dessous.

Dans tous les cas, la collerette 82 de la bague 8 se situe du côté de la face inférieure 31, et le corps 81 s'étend depuis la collerette 82 vers la cavité 55 au travers du porte-semelle 3.

Dans l'exemple représenté en figure 1 et dans l'exemple représenté en figure 6, le bloc 50 fait partie intégrante du porte-semelle 3, une plaque 800 portant les bagues 8 ne peut donc être placée dans le logement 33 par la face supérieure 32. De même, une bague 8 ne peut pas être insérée dans un conduit secondaire 38 par la face supérieure 32. Chaque bague 8 peut être insérée dans un conduit secondaire 38, ou la plaque 800 placée dans le logement 33, uniquement par la face inférieure 31, avant solidarisation de la semelle 2 avec le porte-semelle 3.

Comme mentionné ci-dessus, dans le cas où les bagues 8 sont montées sur une plaque 800 (figure 1), la collerette 82 vient donc en butée contre l'épaulement 804 dans le trou 808 de la plaque 800. Dans le cas où les bagues 8 sont montées dans les conduits secondaires 38 (figure 6), la collerette 82 vient en butée contre le bord du trou 58. Dans les deux cas, la collerette 82 peut venir en butée soit directement, soit indirectement, comme expliqué ci-dessous.

Dans le cas d'un contact indirect, un ressort (par exemple un ressort hélicoïdal, un ressort ondulé ou un joint comprimé) est monté sur le corps 81 entre la collerette 82 et l'épaulement 804 ou le bord du trou 58. Au repos, le ressort est en contact avec la collerette 82 et l'épaulement ou le bord du trou 58, et la collerette 82 dépasse de la face inférieure 31 (par exemple au niveau du fond de la glissière 5 si cette glissière 5 est présente). Lorsque la semelle 2 est solidarisée avec le porte-semelle 3 (par exemple par coulissement du profilé 4 de la semelle 2 dans la glissière 5) la seconde face 22 est au contact de la face inférieure 31, la collerette 82 est repoussée dans le trou 808 ou le conduit secondaire 38, et comprime le ressort. Cette solution est représentée en figure 1 et en figure 6.

Dans le cas d'un contact direct entre la collerette 82 et le bord du trou 58 (figure 6) ou entre la collerette 82 et l'épaulement 804 dans le trou 808 de la plaque 800 (figure 1), la collerette 82 est conformée de telle sorte que, non déformée, elle dépasse de la face inférieure 31. Lorsque la semelle 2 est solidarisée avec le porte-semelle 3, la collerette 82 est déformée entre la seconde face 22 et l'épaulement 804 ou le bord du trou 58. Cette déformation est par exemple une compression selon l'axe A du matériau de la collerette. Alternativement, la collerette 82 présente au repos une forme convexe ou concave, et cette déformation est un aplatissement de la collerette 82. Dans tous les cas d'un contact direct, la déformation de la collerette 82 remplit en outre une fonction d'étanchéité entre la bague 8 et la seconde face 22.

Dans les deux cas de contact (direct ou indirect), la collerette 82 vient en contact uniquement avec la base 61 de la tôle 60 et épouse la surface de la base 61 de façon à être maintenue en appui contre la seconde face 22 de la semelle 2. Ce maintien est réalisé soit par déformation de la collerette 82 elle-même (la collerette 82 constitue alors le mécanisme de rappel 90), soit par compression du ressort (qui constitue alors le mécanisme de rappel 90). Ce mécanisme de rappel 90 permet de plaquer la collerette 82 contre la seconde face 22. D'autres mécanismes de rappel 90 remplissant la même fonction peuvent être utilisés.

La collerette 82 réalise un blocage en translation de la bague 8 dans le conduit secondaire 38 selon l'axe A dans une direction, à savoir la direction vers le haut sur les figures montrant la bague 8 (déplacement de la bague 8 vers le haut).

La semelle 2 comporte un matériau de friction 25, et une tôle 60 qui présente une base 61 et des pattes 62 qui s'étendent depuis la base 61. Par exemple cette tôle 60 est métallique. La base 61 forme une partie de la seconde face 22 de la semelle 2. Les pattes 62 sont recourbées vers la première face 21 (face de friction). Ainsi, les pattes 62 comprennent des premières pattes 621 qui pénètrent dans le matériau de friction 25 de façon à fixer le matériau de friction 25 sur la tôle 60. La figure 2 montre la semelle 2 dans le cas où le mécanisme de fixation (4, 5) comporte une glissière 5 et un profilé 4. Dans ce cas la base 61 forme une partie de la face opposée 22 et du profilé 4. Les pattes 62 comprennent optionnellement des deuxièmes pattes 622 qui épousent le profil (par exemple convexe) du profilé 4 de façon à maintenir mécaniquement le matériau de friction 25 contre la base 61.

Lorsque la semelle 2 est solidarisée avec le porte-semelle 3 en faisant coulisser le profilé 4 dans la glissière 5, la collerette 82 de chaque bague 8 est plaquée contre la seconde face 22 du profilé 4, comme expliqué ci-dessus. La collerette 82 vient ainsi en contact avec la tôle 60 sur une zone de contact ZC. Dans le cas général où l'extrémité inférieure de la bague 8 n'est pas une collerette mais une autre forme, c'est cette extrémité inférieure qui vient en contact avec la tôle 60 sur une zone de contact ZC. La zone de contact ZC est circonférentielle de façon à entourer entièrement l'axe de la bague 8 dans la surface (par exemple un plan) dans lequel cette zone de contact s'étend afin d'établir l'étanchéité. La zone de contact ZC entoure donc entièrement de même l'axe central A du conduit secondaire 38. Par exemple la zone de contact ZC est annulaire. La zone de contact ZC présente toujours un trou central qui correspond à l'orifice du conduit primaire 28 de la semelle 2. La bague 8 est coaxiale avec le conduit primaire 28.

La tôle 60 est conformée de telle sorte que chaque bague de jonction 8 vienne en contact uniquement avec la base 61 et épouse la surface de la base 61 sur la zone de contact ZC. Dans le cas où l'extrémité de la bague de jonction 8 est une collerette 82, la portion de la bague de jonction 8 qui forme la zone de contact ZC est le sommet de la collerette 82. La zone de contact ZC est ainsi annulaire et plane ou sensiblement plane, comme visible sur les figures 1 et 2. La base 61 est donc plane ou sensiblement plane et uniforme au niveau de cette zone de contact ZC. Le contact intime entre la bague 8 et la base 61 au niveau de la zone de contact ZC minimise les fuites entre la bague 8 et la semelle 2.

En comparant la figure 9 qui représente un exemple selon l'art antérieur et la figure 2, une patte 62 a été supprimée et la base 61 a été étendue de telle sorte que la zone de contact ZC est constituée par la base 61 uniquement. D'autres modifications (conformation) de la tôle 60 sont possibles à condition que la zone de contact ZC soit constituée par la base 61 uniquement.

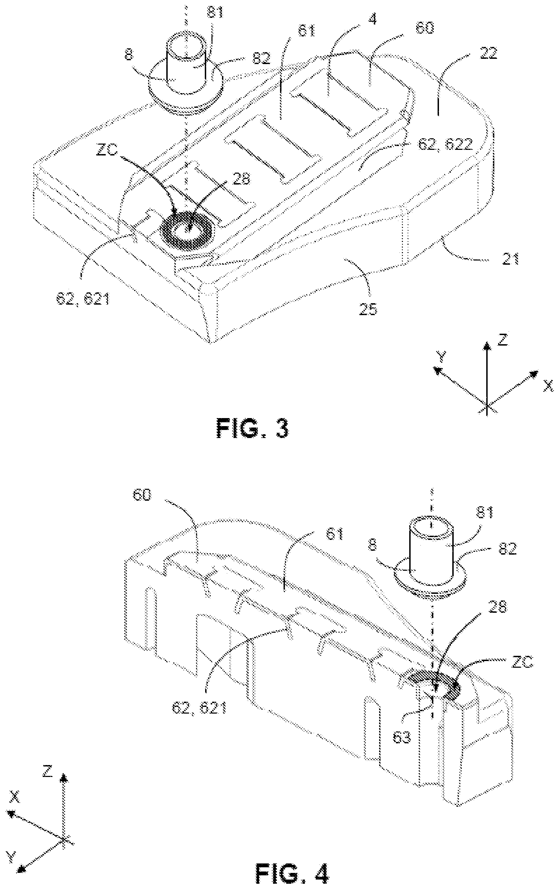

La figure 3 représente une variante de réalisation dans laquelle la surface de la base 61 présente un surfaçage au niveau de la zone de contact ZC de telle sorte que cette surface épouse plus intimement la surface de la au moins une bague 8 que s'il n'y avait pas de surfaçage. Ce surfaçage est par exemple un polissage. Par exemple, dans le cas où c'est le sommet de la collerette 82 qui est en contact avec la base 61, on effectue un polissage de la zone de contact ZC qui est annulaire et plane.

La figure 4 représente une variante de réalisation dans laquelle la tôle 60 présente un cylindre 63 qui s'étend depuis la base 61 le long de la paroi du conduit primaire 28 sur une hauteur minimale donnée. Le cylindre 63 épouse la paroi du conduit primaire 28. Le cylindre 63 est réalisé par tout moyen. Par exemple le cylindre 63 est un embouti réalisé par emboutissage de la tôle 60. Ainsi, la fixation de la tôle 60 sur le matériau de friction 25 est renforcée. Avantageusement, la tôle 60 présente autant de cylindres 63 que de conduits primaires 28, chacun des conduits primaires 28 ayant ainsi un cylindre 63 qui s'étend le long d'une partie au moins de sa paroi.

La figure 5 illustre la tôle 60 vue de dessous et en perspective. On voit ainsi le cylindre 63 qui s'étend selon l'axe vertical Z dans le sens négatif depuis la base 61 de façon à pénétrer dans le conduit primaire 28.

## Revendications

1. Ensemble à friction (1) pour système de freins pour matériel roulant ferroviaire, ledit ensemble à friction (1) comprenant d'une part un porte-semelle (3) comprenant une face inférieure (31), une face supérieure (32) et au moins un conduit secondaire (38) d'axe central A qui relie ladite face inférieure (31) et ladite face supérieure (32), d'autre part au moins une semelle (2) qui présente une première face (21) qui est la face de friction et une seconde face (22) qui est apte à être fixée sur ladite face inférieure (31) par un mécanisme de fixation (4, 5), et au moins un conduit primaire (28) qui relie ladite première face (21) et ladite seconde face (22), ladite semelle (2) comportant un matériau de friction (25) et une tôle (60) qui présente une base (61) qui forme une partie de la seconde face (22), ledit ensemble à friction (1) comportant en outre au moins une bague de jonction (8) qui est agencée dans ledit au moins un conduit secondaire (38) et qui établit une jonction avec ledit au moins un conduit primaire (28) lorsque ledit au moins un conduit primaire (28) est aligné avec ledit au moins un conduit secondaire (38), et également un mécanisme de rappel (90) qui maintient ladite au moins une bague de jonction (8) en contact avec ladite seconde face (22) sur une zone de contact (ZC) circonférentielle, ledit ensemble à friction (1) étant **caractérisé en ce que** ladite tôle (60) est conformée de telle sorte que ladite au moins une bague de jonction (8) vient en contact uniquement avec ladite base (61) de la tôle (60) et épouse la surface de ladite base (61) sur ladite zone de contact (ZC).

2. Ensemble à friction (1) selon la revendication 1 tel que ladite tôle (60) présente au moins un cylindre (63) qui s'étend depuis ladite base (61) le long de la paroi dudit au moins un conduit primaire (28).

3. Ensemble à friction (1) selon l'une quelconque des revendications 1 à 2 tel qu'il comprend en outre un bloc (50) qui est relié à un dispositif d'aspiration et qui est solidarisé avec ledit porte-semelle (3) au niveau de ladite face supérieure (32), ledit bloc (50) présentant une cavité (55) qui est reliée par un circuit (51) au dispositif d'aspiration et qui communique avec ladite face supérieure (32).

4. Ensemble à friction (1) selon la revendication 3 tel que ledit bloc (50) fait partie intégrante dudit porte-semelle (3).

5. Ensemble à friction (1) selon l'une quelconque des revendications 1 à 4 tel que ledit mécanisme de rappel (90) est un ressort.

6. Ensemble à friction (1) selon l'une quelconque des revendications 1 à 4 tel que ladite bague de jonction (8) comporte une collerette (82) qui vient en contact uniquement avec ladite base (61) et ledit mécanisme de rappel (90) est ladite collerette (82).

## Patentansprüche

1. Reibanordnung (1) für ein Bremssystem für Schienenfahrzeuge, wobei die Reibanordnung (1) einerseits einen Bremssohlenträger (3) umfasst, welcher eine Unterseite (31), eine Oberseite (32) und zumindest einen die Unterseite (31) mit der Oberseite (32) verbindenden Nebenkanal (38) mit der Mittelachse A aufweist, sowie andererseits zumindest eine Bremssohle (2), die eine die Reibfläche bildende erste Seite (21) und eine zweite Seite (22) aufweist, die mittels eines Befestigungsmechanismus (4, 5) an der Unterseite (31) befestigt werden kann, sowie zumindest einen Hauptkanal (28), der die erste Seite (21) mit der zweiten Seite (22) verbindet, wobei die Bremssohle (2) ein Reibmaterial (25) und ein Blech (60) mit einer Basis (61) umfasst, die einen Teil der zweiten Seite (22) bildet, wobei die Reibanordnung (1) ferner zumindest einen Verbindungsring (8) umfasst, der in dem zumindest einen Nebenkanal (38) angeordnet ist und eine Verbindung mit dem zumindest einen Hauptkanal (28) herstellt, wenn der zumindest eine Hauptkanal (28) mit dem zumindest einen Nebenkanal (38) ausgerichtet ist, sowie einen Rückstellmechanismus (90), der den zumindest einen Verbindungsring (8) über einen Umfangskontaktbereich (ZC) in Kontakt mit der zweiten Seite (22) hält,
wobei die Reibanordnung (1) **dadurch gekennzeichnet ist, dass** das Blech (60) so ausgeformt ist, dass der zumindest eine Verbindungsring (8) ausschließlich mit der Basis (61) des Blechs (60) in Kontakt gelangt und sich im Kontaktbereich (ZC) an die Oberfläche der Basis (61) anschmiegt.

2. Reibanordnung (1) nach Anspruch 1,
wobei das Blech (60) zumindest einen Zylinder (63) aufweist, der sich von der Basis (61) ausgehend entlang der Wandung des zumindest einen Hauptkanals (28) erstreckt.

3. Reibanordnung (1) nach einem der Ansprüche 1 bis 2,
wobei sie ferner einen Block (50) umfasst, der mit einer Absaugvorrichtung verbunden ist und im Bereich der Oberseite (32) fest mit dem Bremssohlenträger (3) verbunden ist, wobei der Block (50) einen Hohlraum (55) aufweist, der über einen Strang (51) mit der Absaugvorrichtung verbunden ist und mit der Oberseite (32) in Verbindung steht.

4. Reibanordnung (1) nach Anspruch 3,
wobei der Block (50) integraler Bestandteil des Bremssohlenträgers (3) ist.

5. Reibanordnung (1) nach einem der Ansprüche 1 bis 4,
wobei es sich bei dem Rückstellmechanismus (90) um eine Feder handelt.

6. Reibanordnung (1) nach einem der Ansprüche 1 bis 4,
wobei der Verbindungsring (8) einen Kragen (82) aufweist, der ausschließlich mit der Basis (61) in Kontakt gelangt, und es sich bei dem Rückstellmechanismus (90) um den Kragen (82) handelt.

## Claims

1. Friction assembly (1) for a brake system for railway rolling stock, said friction assembly (1) comprising on the one hand a brake head (3) comprising a lower face (31), an upper face (32), and at least one secondary duct (38) of central axis A which connects said lower face (31) and said upper face (32), on the other hand at least one shoe (2) which has a first face (21) which is the friction face and a second face (22) which is adapted to be fixed on said lower face (31) by a fastening mechanism (4, 5), and at least one primary duct (28) which connects said first face (21) and said second face (22), said shoe (2) comprising a friction material (25) and a plate (60) which has a base (61) which forms part of the second face (22), said friction assembly (1) further comprising at least one connecting ring (8) which is arranged in said at least one secondary duct (38) and which establishes a connection with said at least one primary duct (28) when said at least one primary duct (28) is aligned with said at least one secondary duct (38), and also a return mechanism (90) which keeps said at least one connecting ring (8) in contact with said second face (22) at a circumferential contact zone (ZC), said friction assembly (1) being **characterized in that** said plate (60) is shaped so that said at least one connecting ring (8) comes into contact only with said base (61) of the plate (60) and fits closely against the surface of said base (61) at said contact zone (ZC).

2. Friction assembly (1) according to claim 1, wherein said plate (60) has at least one cylinder (63) which extends from said base (61) along the wall of said at least one primary duct (28).

3. Friction assembly (1) according to any one of claims 1 to 2, further comprising a manifold block (50) which is connected to a suction device and which is secured to said brake head (3) at said upper face (32), said block (50) having a cavity (55) which is connected by a circuit (51) to the suction device and which is in communication with said upper face (32).

4. Friction assembly (1) according to claim 3, wherein said block (50) is an integral part of said brake head (3).

5. Friction assembly (1) according to any one of claims 1 to 4, wherein said return mechanism (90) is a spring.

6. Friction assembly (1) according to any one of claims 1 to 4, wherein said connecting ring (8) comprises a flange (82) which comes into contact solely with said base (61), and said return mechanism (90) is said flange (82).
